Europäisches Patentamt

European Patent Office

Office européen des brevets

(19)

(11) Publication number: **0 262 645**

**A1**

(12) **EUROPEAN PATENT APPLICATION**

(21) Application number: 87114222.0

(51) Int. Cl.⁴: **F03B 17/02**

(22) Date of filing: 29.09.87

(30) Priority: 29.09.86 YU 1672/86

(43) Date of publication of application:
06.04.88 Bulletin 88/14

(84) Designated Contracting States:
AT BE CH DE ES FR GB GR IT LI LU NL SE

(71) Applicant: Cvijovic, Radomir, Dipl.-Ing.
Rifata Burdzevica 69
11000 Belgrad(YU)

(72) Inventor: Cvijovic, Radomir, Dipl.-Ing.
Rifata Burdzevica 69
11000 Belgrad(YU)

(74) Representative: Patentanwälte Zellentin
Zweibrückenstrasse 15
D-8000 München 2(DE)

(54) **A hydrothrusting turbine.**

(57) The invention represents a hydrothrusting turbine with several hollow floats (9) arranged in a series, which form a working wheel (K) that passes upwards from the space with atmospheric air through a pool filled with a fluid. The hydrothrusting turbine, according to the first embodiment, is composed of a hollow axle (1) with a roller (5) over which endless bands (17) are thrown. They are, also, thrown over wheels (33) of the other axle (2) on which are placed a reducer (31) and a generator (7).

Each float (9) is filled by compressed air from a compressor by means of a corresponding hose (20) extending from the clutch opening (23) through the hollow axle (1) and the spokes (14) into bellows (24) with a wrapping inserted into auxiliary floats (10) that expand the basic float (11), in which enters atmospheric air during and after the entrance of compressed air.

According to the second embodiment, the hydrothrusting turbine has, on the broadened part of the hollow axle (51), horizontally placed on an ellipse several cylindric floats (53), to whose central parts are connected in pairs spokes (54) from the hollow axle (51), through which passes a hose (71) extending to the opening (78) of the clutch (60), connected with the pipe of the compressor.

The floats (53) are placed together with the hollow axle (51) so that a bigger number of floats is situated in the pool with water, while the rest of the floats are in the airy space, where they exhaust the air by a special hydraulic device.

In both embodiments of the invention the floats pass trough a tubular gasket what prevents entrance of fluid from the water pool into the space filled by air.

EP 0 262 645 A1

FIG. 1

# A HYDROTHRUSTING TURBINE

The invention relates to the field of energetic plants and devices, in particular to propulsion machines.

The technical problem solved by this invention is the following: how to fill several hollow floats, connected to a working wheel, with compressed air in a lower position (in the deepest pthe water), i.e. in a lower part of a pool containing a certain quantity of water in which the floats would move upwards towards the water surface due to a growing force of hydrostatic thrust of the water, and how could they increase their volume while the level of the water column is reduced above them, i.e. because of reduction of pressure of the water column, and how could they continue to be filled by atmospheric air during movement towards the water surface, and how to empty the floats when they arrive on the water surface and continue their movement through the air and through the opening of the tubular gasket, preventing the entrance of water into the airy part of the space during this process. Continuous turning of the working wheel with connected floats must be provided during these operations, thus ensuring and effecting continuous useful work.

Briefly, the problem is how to maintain continuously the rotary volume of the working wheel of this device in quiet water during the working process with a sufficient degree of efficiency.

The Archimedes' principle with variable volume in water and air has been used in many ways in a plurality of known devices representing floating or flying objects and in the applied art. This refers to air baloons, submarines and similar devices. They use a change of volume that depends on the level of the air or a liquid column above their vertical section up to the technical limit of the endurance of the material of the floating object.

The attempts of the technical designers in the past to use the force of thrust as to obtain useful work by help of propulsion machines based on this working principle have resulted in many solutions indicating that they have remarked a logical possibility to exploit this natural force, but disregarding that they did not remark correctly that positive work cannot be provided by the help of a passive volume only.

These technical designers did not understand the essential physical phenomenon and functional principle widely used in practice already for a long time.

If a float is filled by expanding fluid, it continues to expand automatically during its movement, until it exits from the denser environment in which it is placed or until it is destroyed. This is going on without additional energy and is merely due to reduction of the outer pressure on its surface in higher altitudes when the inner pressure force destroys the material of the float. This phenomenon has been widely used worldwide during centuries.

Solutions presented by nature and principles on which the movement of 'living floating objects' is based have not yet been explored.

Many experts in the field of energy do not understand the scientific way of getting positive energetic balance even today. They do not take into consideration all dimensions of force of a working system like this. They do not even differentiate between a working system and an empty stroke when the system of floats stops in a thrusting environment, such as fluid. If each propulsion float gets a minimun quantity of expanding fluid, it can enlarge so much that it can disturb the balance between active and resistant forces. When the system turns on, the floats must emerge from the water, each one from its own depth, and then the whole floating volume pulls without interruption. The process of increasement of the floating volume will then self-propelled continue depending on the size of hydrostatic pressure in different levels during the working cycle of this system.

When the working cycle is established, additional energy from the artificial source is used only for constant preservation of the propulsion volume and only for filling the next input float by expansive fluid.

Solutions based on the use of atmospheric pressure forces with thrust of fluid did not use an additional artificial source of energy for obtaining a constant and sufficiently large compression force that would be capable of producing a sufficient thrust force for a small movement of the hydrostatic fluid column resisting to movement caused by thrust. Apart therefrom, it was necessary to create conditions for overcoming all resistant forces acting opposite to the sum of active forces.

The failure of the analytic critics was their estimation of the quantity of used propulsion energy in acquiring the total floating volume of several floats. They did not understand that this energy was constant from the moment the working regime was established until the work of the system was terminated.

In the polytechnic book Perpetuum Mobile, edited by SNTL-NAKLADATELSTVI TECHNICKE LITERATURY, PRACE, 99 SVAZZEK from Stanislav Michal, B.S., page 160, Fig. 93, a hydraulic perpetuum mobile using the floats of William Chaper, Philadelphia, is illustrated. This was imitaded by a plurality of modern designers of perpetuum mobiles of plural variants.

William Chaper has created another type of 'perpetuum mobile' the principles of which are often to be found in literature referring to perpetuum mobiles. As quoted, in Fig. 93 he used the open loop in the form of a rubber band to which cork floats are fixed. One end of the loop tightened by two pulleys passes through the plate that contains water, mercury or any other fluid. The functional principle of Chaper's machine is based on the importance of the principle of thrust in fluids.

Michal, B.S. however, tried to check by a simple calculation whether Chaper's machine would ever really work. He did this by presuming that to the thin rubber band of the loop, volume and weight of which can be neglected as compared with the floats, totally 20 floats are fixed the volume of each being 1 $m^3$. If 6 floats are constantly submerged into the water, their volume thrusts a total of 6 $m^3$ of water. The power thrust lifting the band with the floats attains 58,840 N. In opposition to this force acts the weight of the floats which, however, is in a balance with the weight of the floats fixed at the other free end of the band. This means that the band gets tightened in the upward direction by a force of 58,840 N. This force should drive it into continuous movement. The work effected by each semi-rotation of the band can be calculated by means of a known formula: work = force x distance. If, for example, the length of the band between the pulleys is 10 m, the work is equal to L = 58,840 N x 10 m = 588,400 Nm. If this endless band with the floats is supposed to rotate constantly the floats must enter into a water tank from the lower side and exit from it from the upper side. First of all, during entrance into the tank each float has to overcome a force that is acting from the opposite direction, which is established by the weight of the water column through which the band passes. If the height of this column is, for example, 8 m the total pressure force acting on one m of the front part of the float just entering the tank is 8 x 78,453,200 N, i.e. is equal to the weight of 8 $m^3$ of water. The thrust force is equal to 58,840 N and this is not sufficient for the band to pull the float into the tank through the lower opening. Apart therefrom, it is necessary to calculate the friction resistance of the pulley, the rigidity of the band and the great resistance of the floats during their passing through the tubular gaskets placed on the bottom of the plate.

He quotes this technical solution of William Chaper with a partly analysis of active and resistant forces of the passive loop unable to expand in volume. He does not give any solutions that would enable the possibility of finding technical solutions using the force of thrust as a new source of energy.

Michael quotes that the principle of preservation of energy does not have any connection with the hydrostatic theory.

Air balloons and other floating and flying objects filled by light gases and travelling over great distances already for two hundred years establish proof for the theoretical supposition of the law of Robert Mayer which is not contrary to that of Archimedes and that relates to water and gases.

The principle of individual movement of these floating objects is the same as for movement of more than one of them together connected in any manner even in a closed loop capable of creating a propulsion circuit in any device. The movement of balloons in the air and floats filled by air in water is absolutely analogous.

Greater density of water will give much greater speed of float movement in the fluid, whether an individual float or in series connected floats are concerned, as well as a shorter route of movement of the whole floating system in that environment.

False suppositions of the critics of technical solutions based on the hydrothrusting working principle have resulted in scientific and technical errors and scientific confusion for many centuries. They have caused unestimable damage to mankind and science, which had in general an orientation to extremely complicated solutions with limited sources of propulsion material.

A similar device as compared with this technical solution is the gravitational waterwheel. It uses the torque that is a resultant of all buckets moving downwards, towards the surface of the earth and thus produce the total propulsion force acting in their common center of gravity.

If the buckets are filled by propulsion material, only that bucket which is placed under the funnel used for supplementary filling of material will be filled. The traction acting in the propulsion direction will represent the sum of the individual forces of the weights of the whole series.

The analogy of the working wheel of the hydrothrusting turbine according to this invention, which is formed by several floats of changeable volume, is the same as the pulling volume of the gravitational waterwheel. The difference consists in that the resultant of the force of thrust is obtained from a series of increased floating volumes of the system submerged into the water.

According to executed research, other similar technical solutions in patented and not patented publications have not become known to the inventor.

The technical problem is solved by the attached claims, particularly by a hydrothrusting turbine formed by several series-connected hollow floats, a part of which placed in water represents the floating volume of a closed circuit of a series of floats. The floats are filled near the bottom of the water pool in such manner that the auxiliary float which is analogous to the 'bladder of fishes and other living floating objects' and which represents the tenth part of the volume of the basic float is filled with compressed air. This source compulsively changes the floating volume of the floats depending on the level reduction of the hydrostatic column. The energy consumption for filling the auxiliary float is only as much as is needed for establishing a positive difference between the active force of thrust and the resistant forces of the system's movement. For further filling the basic float the pressure of the atmospheric air column is used. This represents a great gain of power, since atmospheric pressure acts on each $m^2$ by a force of 10 t. Filling of atmospheric air into basic floats is executed continuously, because they are in constant connection with atmospheric air. The pressure difference established in the auxiliary and the basic floats causes air rarefaction in the basic float. This creates low pressure in 9/10 volume of each float and entrance of a considerable quantity of atmospheric air. The atmospheric pressure becomes a natural compressor acting on each ms by a force of 10 t on the inner side of the floats and the external atmospheric pressure which is transferred by fluid on the changeable working surface of the float is thus annulled. These are the main advantages of the turbine according to the present invention.

The individual filling of the auxiliary floats of each basic float with compressed air at the start is an intermittant process demanding a certain period for two subsequent fillings. This is the reason why this interrupted function cannot be integrated and we have to apply the sum of all volumes given by the floating part of the working circuit. This is a further advantage of the hydrothrusting turbine of the invention.

The working wheel of the hydrothrusting turbine is constructed such that it has a series of hollow floats in the form of a toroidal loop or hollow cylinders endless connected in series showing an ellipse-like form. A section of the working circuit, composed of one third of the floats, passes through the water pool of a certain depth, while the other section is in the air. A tubular gasket is placed at the intersection water/air, thus permitting passage of water into the airy part of space. During movement the floats lift upwards into the pool through an opening and exit into the air out of the surface of the water.

The greatest force resistance to the rotary movement of the working wheel, i.e. of the system of floats, is the force of hydrostatic pressure acting on the horizontally sectioned starting surface through the center of gravity of the float entering into the fluid. The center of gravity of the input float is placed at the starting depth after the float enters the fluid.

It is necessary to obtain a sufficient expansion force in the auxiliary float which would be capable of lifting the whole water column to a small height above the starting carrying plane in order to overcome said and other forces of an opposite direction. It must enlarge the auxiliary and the basic float by thrust up to a size of sufficient volume capable to continue movement on the propulsion route until it exits from the fluid in a self-propelled manner. It will enlarge its floating volume on this route as many times as the pressure of the water column is reduced in the different levels of their corresponding sections. The basic float passes then a series of subsequent positions from the start up to the surface of the fluid.

This operation is repeated consecutively for each float thus ceding its place in the space to the next float. Through a feeding connection of the contact clutch their auxiliary floats become then filled by compressed air, while the basic floats become filled by atmospheric air, due to the pressure difference obtained in the auxiliary and basic floats.

The invention will now clearly be described by help of the enclosed Figures:

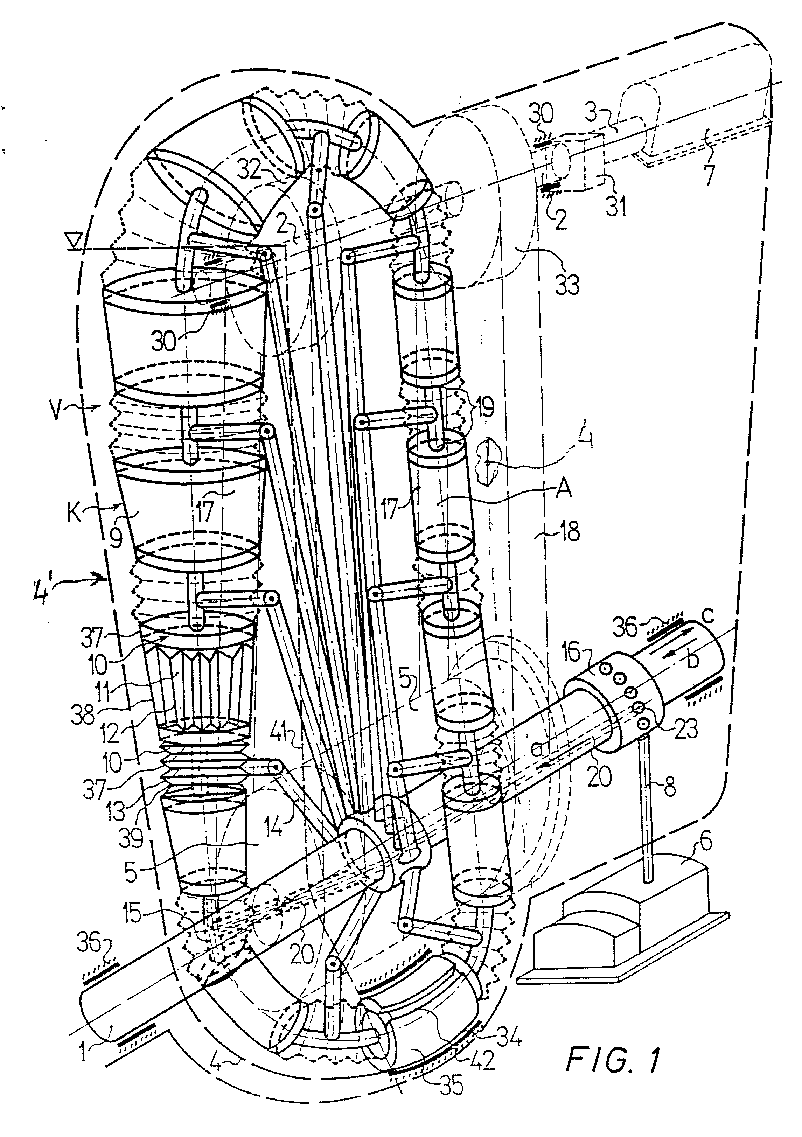

Fig. 1 shows the hydrothrusting turbine in a tridimensional view, according to a first embodiment of the invention;

Fig . 2 shows the connection between two floats of the hydrothrusting turbine from Fig. 1, one of them being in the volume during operation, the other shown during an empty stroke along the propulsion route;

Fig. 2a shows the connection between the auxiliary and the basic float of the hydrothrusting turbine of Figs. 1 and 2;

Fig. 2b shows the framework design of a float of the hydrothrusting turbine of Figs. 1 and 2;

Fig. 2c shows the upper view of Fig. 2b, i.e. the metallic sticks of an auxiliary float of the hydrothrusting turbine during operation;

Fig. 2d shows an elastic pneumatic bellow with a net-like cover placed together between pairs of crossed sticks of an auxiliary float placed in two planes in both bases of the float; and

Fig. 3, 3a, and 3b illustrate the hydrothrusting turbine according to the second embodiment of the invention.

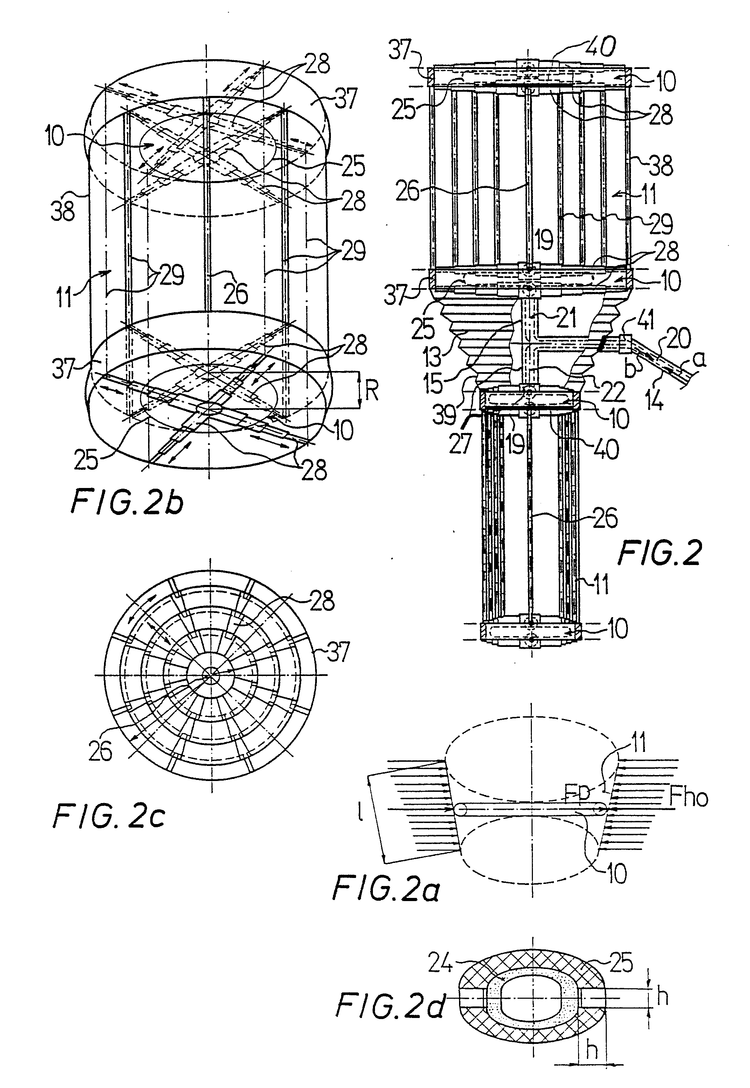

In accordance with Figs. 1, 2, and 2a - 2d, the hydrothrusting turbine according to the first embodiment consists of a horizontally placed hollow propulsion axle 1 which is placed by its ends in bearings 36, in which it can freely rotate. On the axle 1 a roller 5 is tightened.

Above and parallel to the axle 1 an axle 2 is situated and is placed in bearings 30 in which it can freely rotate. To the axle 2a a cogged wheel 32 is fixed. A cogged endless band 17 is thrown over the wheel 32 and over the roller 5. Several floats 9, lined up in series, are fixed to said band. The floats 9 are mutually connected by three-armed joint clutches 15. A cogged wheel 33 is fixed on the horizontal axle 2. A cogged endless band 18 is thrown over the roller 5 and the wheel 33. The axle 2 enters into a reducer 31, to the exiting shaft 3 thereof an axle of a generator 7 behind the reducer 31 is connected.

To the hollow axle 1 are connected by lower ends hollow telescopic spokes 14 of changeable length. By their other ends they are connected to an arm of the three-armed joint clutch 15 between floats 9. On the right end of the hollow axle 1 a contact supply clutch 16 is placed on the circumference thereof openings 23 with valves are radially formed.

The openings 23 with valves are connected to the opening of a supply pipe 8 attached to a compressor 6, by which pipe compressed air is driven away from the compressor 6.

From each opening 23 of the clutch 16 and through the hollow pipe 1 and a corresponding telescopic stick 14 a hose 20 is provided entering into the three-armed clutch 15. The hose 20 is filled with compressed air when the corresponding opening 23 with the valve placed on the clutch 16 rotating together with the axle 1 becomes connected to the output opening of the connection pipe 8 of the compressor 6.

The floats 9 consist of upper and lower auxiliary floats 10 and a basic float 11. Auxiliary floats 10 are formed of cross-placed telescopic sticks 28 situated in two planes on the lower and the front side of the basic float 11. Between the cross-placed telescopic sticks 28 situated in two planes on the lower and the upper front side of the basic float 11 bellows 24 with a metallic cover 25 capable of expanding only horizontally are placed.

In clutch 15 the hose 20 is divided into an upper arm 22 and a lower arm 22. The upper arm 21 enters into the lower auxiliary float 10, i.e. into its bellows 24 with the cover 25, while the lower arm 22 enters into the upper auxiliary float 10 of the next float 9, more precisely, into its bellows 24 with the cover 25. In the arm of clutch 15 spreading towards the lower float 9 a partition 27 is placed through which tightly passes the arm 22 of the hose 20. The partition 27 has the purpose not to permit entrance of atmospheric air passing through the hollow pipe 1, spoke 14 and clutch 15 into the lower basic float 11, but to enable the entrance of said air only through the upper arm of the clutch 15 into the upper float 9, i.e. into the basic float 11 or the upper float 9.

A partition 40 is placed under cover 25 with the bellows 24 and above the lower telescopic tsicks 28 in the upper auxiliary float, and above every basic float 11 of the float 9. Its diameter is equal to the diameter of the shrinked float 9 passing through the opening 34 of the tubular gasket 35 which divides the pool V by the funnel 4 from the space A in which exists the pressure of atmospheric air. The partition 40 serves for preventing spreading of atmospheric air from the wrappings 38 and the float 9 placed in pool V, into the float 9, which enters into the opening 34 of the tubular gasket 35 during its rotation. When the float 9 enters into the tubular gasket 35, it is shrinked up to the smallest diameter. During this process, the walls of the tubular gasket press wrappings 37 and 38 and also an edge of the partition 40 which prevents in such position an air passage from float 9 placed in pool V, into another float 9, that passes at that moment through the tubular gasket 35.

The lower auxiliary float 10 of float 9 and the upper auxiliary float 10 of the next lower float 9 become filled by compressed air from the compressor 6 through the corresponding hose 20 (direction a). During and after this, atmospheric air enters (direction b) only into the upper basic float 11 and into cover 39 between the floats 9 through the axle 1 (Figs. 1 and 2), the hollow spoke 14 and through the clutch 15 next to the hose 20 and the upper arm 21 of the hose 20 that enters into the lower auxiliary float 10 of the upper float 9, due to the fact that the hollow clutch 15 is connected by the upper hollow arm 21 with the space of the basic float 11 of the upper float 9. In the lower arm 22 of the clutch 15, jointly connected with the central part of the telescopic sticks 28 of the next lower float 9, a partition is inserted through which the lower arm 22 of the hose 20 passes, so that atmospheric air cannot enter into the next lower float 9 through the lower arm of the clutch 15.

From the floats 9 that have emerged from the water and enter into the airy space A, air is forced to exhaust (direction c), respectively from the basic float 11 and the auxiliary float 10, with the help of compulsive means, such as hydraulic pliers or the like (not shown , because this is known). This air exits through the clutch 15, the spoke 14, and the hollow axle 1 into the atmosphere.

The left part of the endless propulsion toroidal band 17 with the floats 9 passes through the pool V with fluid in the part of funnel 4 that is marked by the axis of symmetry 41. It represents the active part of the working wheel K. Thrust of sufficient intensity acts on it from the depth of the pool V towards the surface of the fluid and it pulls the whole series of floats 9 formed as a closed loop. The pulling part of the working wheel K consisting of a series of thrusting floats spreads in pool V with fluid, for example water and develops into a conical volume during operation, while it shrinks during an empty stroke into a compact hose of an initial radius of the float 9.

The cover wrappings 37 and 38 which cover the metal construction of float 9 of a changeable volume, are made of vertical wrinkles 12 along the basic float 11, and of transversal wrinkles 13 on the wrapping 39 between the floats 9. The floats 9 are mutually connected by the outer wrapping 39. The wrappings 37, 38, and 39 under operating conditions in water form a series of floats 9 with the appearance of truncated cones which create a joint floating volume of maximum thrust of a conical form, i.e. all floats 9 in the water pool V form a conical volume in the upward direction. The spreading of transversal wrinkles 13 on the wrapping 39 between two floats 9 in horizontal direction begins, due to the influence of the difference between the force of water thrust and the tension resistance existing on the entry of the propulsion part of the wheel K into the fluid on one side, and due to the resistant forces and atmospheric air that enters through the axle 1, the spoke 14, and the clutch 15 on the other side.

The vertical wrinkles 12 of the basic float 11 and the transversal wrinkles 13 of the wrapping 39 thrust the metallic framework intended for the expansion of each float 9 during operation. The vertical wrinkles 12 permit the expansion of the basic float 11 in the horizontal plane of the system, while the transversal wrinkles 13 do the same along the horizontal plane along the arc of the elliptic route of the wheel K.

The metallic construction of all basic floats 11 and the auxiliary floats 10 is placed within the cover wrappings 37 and 38, thus forming complete sets of framework constructions that enable a simultaneous expansion of the auxiliary float 10 and the basic float 11, depending on the height of the fluid column above the transversal section of the corresponding surface. The central hollow carrier s6 represents the basic metallic construction of each basic float 11. Hollow telescopic sticks 28 are connected with said carrier which expand in the form of a star with a plurality of arms into two upper and two lower horizontal planes on the height h (Figs. 2, 2a - 2c) on both front sides of the basic float 11. On their terminal ends are placed vertically connected supporting hollow vertical sticks 29 for thrusting, i.e. for expanding the vertical wrinkles 12 during operation.

Metallic telescopic sticks 28 form in two horizontal upper and two horizontal lower planes on height h auxiliary floats 10 placed in pairs in a star-like connection on the central carrier 26.

Transversal telescopic sticks 28 are connected in pairs on the connecting place of the joint 19 and the arms of clutch 15 between the floats 9 (Figs. 1 and 2) fixed to the transportation band 17. Plate bellows 24 are placed between two metallic constructions of the transversally placed telescopic sticks 28 in pairs, on the height h in the lower and the upper basis of the auxiliary float 10. In this occasion, the bellows 24 are inserted inside a net-like cover 25 (Fig. 2b and 2d) that has a toroidal form. The bellows 24 and the cover 25 are made of elastic material of changeable volume in the horizontal plane only.

Into the bellows 24 of the lower auxiliary float 11 of the upper float 9 and the upper auxiliary float 11 of the next lower float 9 enter the arms 21 and 22 of the hose 20 stretching from the opening 23 with the valve of clutch 26. Compressed air entering into the bellows 24 of the auxiliary floats 11 serves for simultaneously changing the volume of the auxiliary floats 10 and the basic float 11 of the upper float 9.

The elastic pneumatic bellows 24 are secured by a net-like toridal cover 25 that should disable creation of 'balloons' between the telescopic sticks 28. The cover 25 is made of metal and it ensures the regular pressure arrangement of the whole horizontal plane of the float 9 as shown in Figs. 2, 2a, 2b, and 2d.

The starry telescopic sticks 28 arranged in pairs limit the auxiliary float 10 from the lower and the upper basis side to a constant height h. The construction permits only an expansion of the auxiliary float 10 and the basic float 11 along a horizontal axis where all floats 9 during operation obtain the form of a truncated cone with the top turned upside down as shown on Figs. 1,2, and 2a.

Arc supporting wrapping firm bands of the same width as the height h forming the wrappings 37 of the auxiliary float 10 are fixed to the end of the changeable telescoping sticks 28 (Figs. 2b and 2c). This supporting band, i.e. wrapping 37, thrusts the vertical supporting carriers 29 in order to enable the changeable volume of float 9 on all heights in the working wheel K.

Compressed air is brought into the auxiliary floats 10, thus used for their expansion, while the cavity of the spoke 14 and the axle 1 enables the atmospheric air to fill up the rarefied milieu in each basic float 11 during operation and in the wrappings 37 and 39.

When they exit into the atmospheric space A, the floats 9 of the floating volume are reduced to the initial diameter of the cylindrical hollow hose that is able to pass through the input opening 34 in the tubular gasket 35 placed at the intersection water/air near the bottom of the pool V. The wheel K with the floats 9 passes through the opening 34 of the tubular gasket 35 placed at the intersection water/air, i.e. between the pool V and the space A of atmospheric air in funnel 4. The tubular gasket 35 has the opening 34 through which pass the floats 9 and a vertical channel 4s through which passes the arm of the clutch 15 to which arm is connected the end of the hollow spoke 14 by the joint 41.

The width of the channel 42 is equal to the diameter of the arm of the clutch 15. Then, the wheel K with the floats 9 continues movement through the pool V of the elliptic tunnel, the funnel 4′, with a gasket. The massive part of the tunnel 4 made of firm material, together with the tubular gasket 35, disables the penetration of fluid into the airy part of the space A. The tunnel 4 has the form of a funnel bent as an ellipse like an elliptic tunnel on the narrowest transversal section of which, i.e. the intersection water/air, is performed the minimum volume of each float 9 and represents the passive volume. The narrow funnel-type part of tunnel 4 in which atmospheric pressure exists is supposed to enable timely reduction of the basic volume of the float 9 until the initial size is obtained.

The constructional connection of a series of floats 9, provided in the described manner, enables to achieve a changeable volume of propulsion working wheel K that is formed in the fluid of pool V by means of an artificial energy source, i.e. pressure of compressed air from the compressor 6 and pressure of atmospheric air entering through the hollow axle 1 and the spoke 14 into the basic float 11 of each float 9.

This source compulsively changes the floating volume of the working floats 9 in the fluid of pool V depending on reduction of height of the hydrostatic column.

Atmospheric air entering into the float 9, already having introduced compressed air from the compressor 6 into its lower auxiliary float 10, is connected to the adjacent float 9 that is placed behind it, and atmospheric air expands into all floats 9 placed in pool V above this float 9 up to the float 9 that has emerged from pool V and that is pressed by some means, for example, by pliers for releasing atmospheric air and compressed air therefrom. The pliers prevent atmospheric air to expand into other floats 9 placed in the air behind that float 9 from which the air is released compulsively, due to the pressure of the pliers.

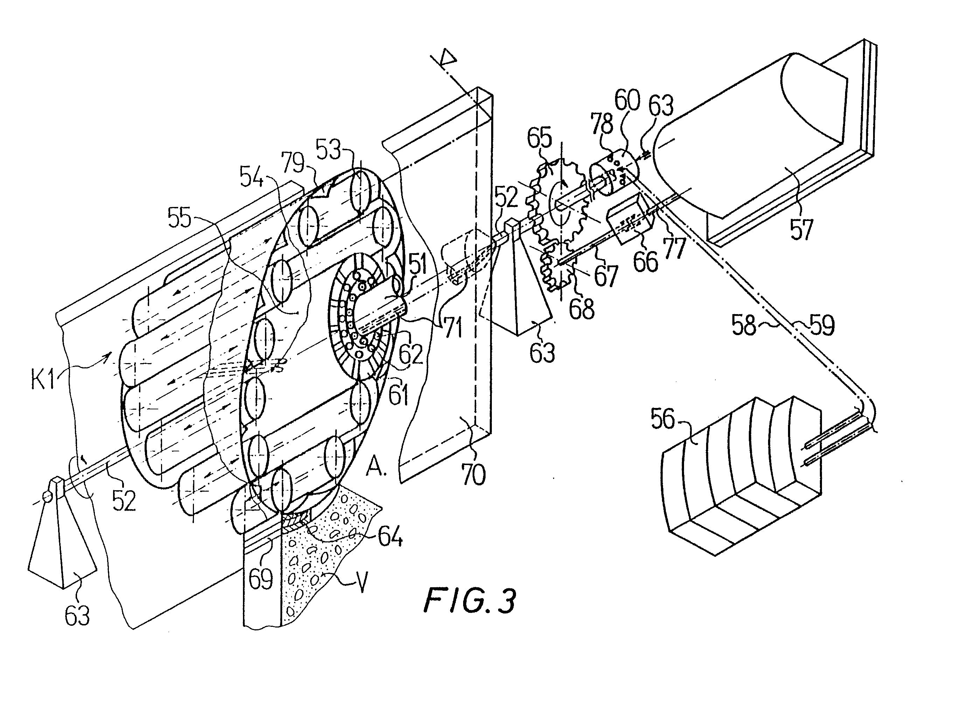

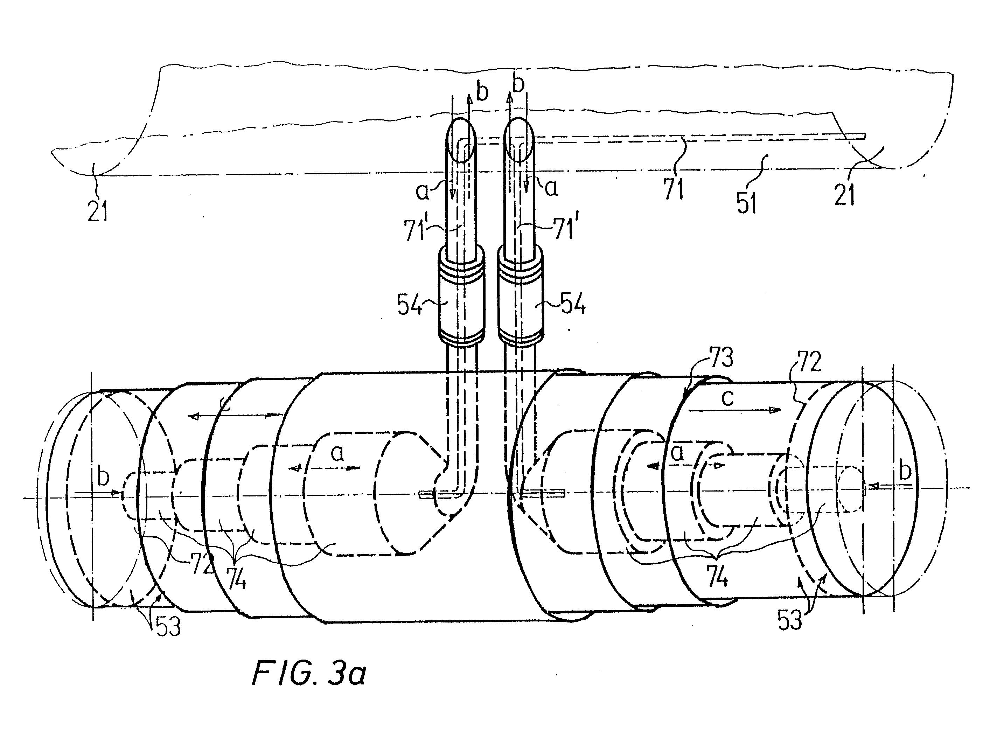

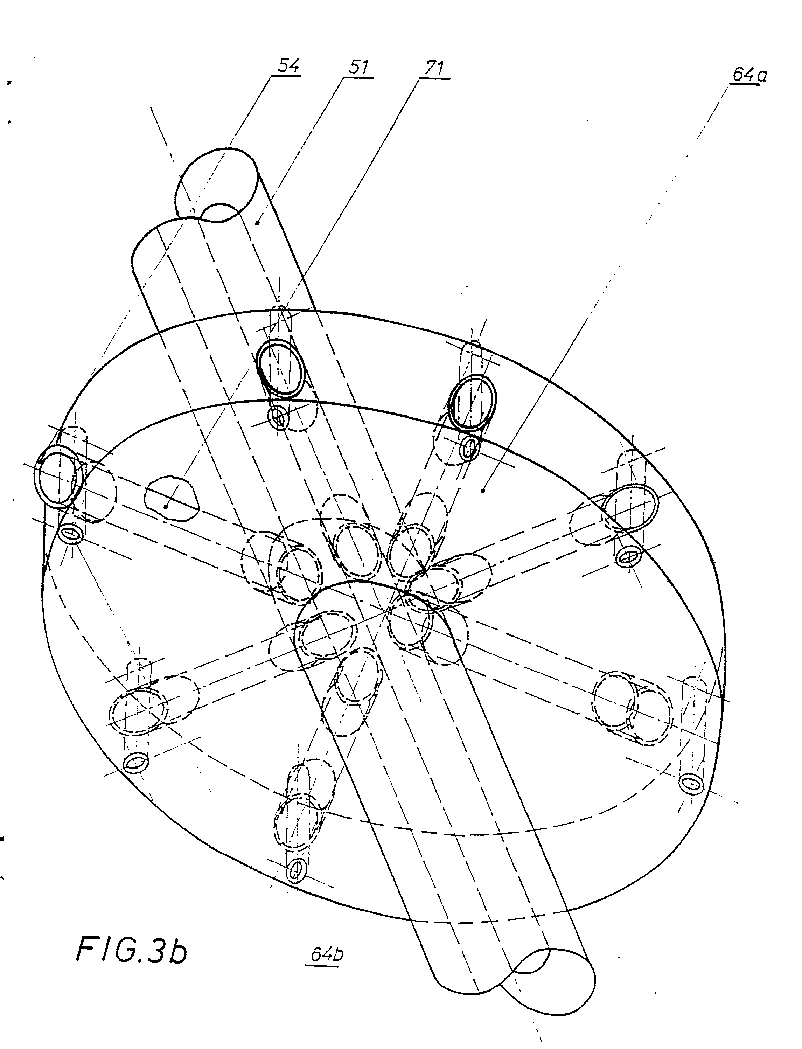

The hydrothrusting turbine, as illustrated in Figs. 3 and 3a, according to a second embodiment of the invention, consits of a horizontally placed hollow axle 51 that is placed in bearings 63 by its narrow extensions 52 and is rotating in said bearings.

Carrying spokes 54 are firmly connected through their ends with the broadened part 55 of the axle 51. Their other ends are connected with middle parts of the vertical cylindric hollow floats 53 that are lined on a gasket wheel 7 around the broadened part 55 of the axle 51 and form a working wheel $K_1$. Two spokes 54 are connected with each float 53 by their other ends.

On the right extension 52 of the axle 51 a cogged wheel 65 and a feeding valve contact clutch 60 for circulation of compressed air in the system, i.e. in the floats 53 of the wheel $K_1$ are fixed.

The stationary housing V of the hydrothrusting turbine is adapted to the form of the working wheel $K_1$. It is located on land and partially in water. The elliptic and curved funnel is placed mostly in the air and connected at the opening of the water gate 64 where the funnel has the smallest diameter. The entry part of the funnel is shown as a semi-chamber like the entrance of a submarine, in order to decrease water pressure.

The wall of the housing is cut through at the place at which it divides the water pool from the air funnel, in order to enable passage of the gasket wheel from water to air.

The particular structure of the gasket wheel Z, shown in Fig. 3a in connection with Fig. 3b, carrying parts for all driving floats 53 according to this invention is provided by closing down all of its sides to cover all spokes and their intersections designing a wheel of definite thickness.

On all surfaces of the entry-floats 53 and their initial volumes, the surfaces of the entrances of the floats 64 into water and the working wheel $K_1$ are covered with the gasket surfaces.

The performance of the driving floats 53 is achieved by double telescopic sticks for the auxiliary floats 74 and the basic floats 53 having changeable volumes during operation.

Every basic float 53 has its own auxiliary float 74 having the tenth part of its volume.

The operating method for the hydraulic turbine as a new device can be summarized as follows.

The working wheel is formed by several floats arranged in a series and producing a changeable floating volume in the water part of the space using three kinds of energy:

Energy supplied from the auxiliary source on the lower level in the water pool which produces an energetic pulse for the forced change under the water makes the difference in pressure between the atmosphere and the space inside the basic floats under water.

The potential energy gained by changeable floating volumes of the working wheel during the operating process increases the thrust on the higher energetic level in the water so that water can be used to drive the generator unit of any capacity.

This means, we need to add only a small input of energy from a specific source to establish and maintain the operating process.

An axle 67 is placed under the right extension 52 of the axle 61 and parallel thereto. Fixed thereto is the cogged wheel 68 toothed into the cogged wheel 65 on the extension 52 of the axle 51. Behind the wheel 68, the axle 67 enters into a reducer 66, with the exiting shaft 77 thereof the axle of the generator 57 is connected.

Openings 78 with valves are provided radially on the bulk of the contact clutch 60. The openings 78 are connected with openings of the supply pipe 58, the other end thereof is connected with the compressor 56 that supplies compressed air to the floats 53. From each opening 78 through hollow parts of the extension 52 of the axle 51 spreads the supply hose 71 dividing into two arms 71 in hollow parts of both spokes 54 entering into the corresponding float 53. The supply hose 71 is filled automatically by compressed air (direction a) when the valve opening 78 on the clutch 60 for the corresponding hose 71 arrives to the exiting opening of the connecting pipe 58 from the compressor 56. Compressed air and atmospheric air exit from the float 53 during exhaustion in the direction b through the hollow spokes 54 and the axle 1 into the atmosphere.

The rectangular openings 61 are provided on the front sides of the broadened part 55 of the axle 1 and they are in continuous connection with atmospheric air that can circulate in both directions (directions c and d) into the float 53 and in the opposite direction.

The circular openings 62 are provided at front sides of a broadened part 55 of the axle 51. Inserted therein they have contact feeding exhaust valves for attaching connecting contact hoses for fluid supply for the propulsion of the working units, such as hydraulic pliers used for exhausting the floats 53 when they emerge from the water surface into airy space A (this is not shown in the Figures, because this is already known).

The floats 53 consist of auxiliary floats 74 and the basic float 73 (Fig. 3a). The basic float 73 and the auxiliary floats 74 are connected so that changes of volume of the auxiliary floats 74 change the whole volume of the basic float 73. Auxiliary floats 74 are placed so that they both change their volume simultaneously.

The auxiliary floats 74 are performed with telescopic pistons. The ends of the spoke 54 through which pass the corresponding arms 71 are connected with a starting cylinder of the auxiliary floats 74. Compressed air from the arms 71 flowing through the hollow telescopic auxiliary floats 74 stretches also the basic float 53 because of their mutual firm connection.

By increasing pressure in the auxiliary floats 74 the volume of the basic floats 53 in the water is changed in axial direction.

The basic float 53 can be made, for example, in such a way that it can expand in the axial direction, due to the influence of the telescopic pistons. The essential feature is that the basic float 53 changes its volume in axial direction depending on the hydrostatic column height. The change of volume of the basic float 53 is performed by compulsory movement of a basis 72 caused by initial pressure of compressed air from compressor 56 during starting charge, while the other part of vertical expansion is performed in a self-propelled manner by entrance of atmospheric air through the openings 61 on the whole way along the useful route of the floating volume.

The working wheel $K_1$ passes with its third part of floats 53 (Fig. 1) always through the pool V with water of corresponding depth. At the intersection water/air, in partition 70 a tubular gasket is placed in which is provided a rectangular opening 64 through which passes the cylindric floats 53 having the initial volume, because air is exhausted therefrom. The tubular gasket 69 disables passage of water into the airy part of space A. Gaps between the cylindric floats 53 are thus filled by the envelope 79 made of a sealing material.

During movement, the empty floats 53 enter into the pool V through the opening 64 upwards and exit into the atmospheric space A from the upper part of the water surface. That is how a constant revolving of the working circuit $K_1$ can be established.

The contructional connection of a series of floats 53 provided in the described manner enables the accomplishment of changes in floating volume of the working floats 53 in the fluid of the pool V depending on a reduction of the hydrostatic column height.

The process of constant renewal of the floating volume by the help of an artificial source is obtained in the same way as in case of the hydrothrusting turbine according to the first embodiment. Then, by propulsion energy, i.e. compressed air only the consecutive entering float in work is filled when the whole floating volume pulls after establishment of the working regime.

The hydrothrusting turbine according to the present invention is subjected to changes regarding changes of dimensions, form, and material as well as application for other purposes without surpassing the limits of the present invention.

### Claims

1. A hydrothrusting turbine having an endless cogged band (17) with several fixed floats (9) forming a working wheel (K) which passes from a space (A) with atmospheric air upwards through a pool (V) filled with water, whose thrusting force acts on the floats (9) thus constantly exercising rotation of the band (17), said band being thrown over one end of a roller (5) fixed on an axle (1) and also over a cogged wheel (32) fixed on a axle (2), while an endless cogged band (18) is thrown over the other end of the roller (5) and over a cogged wheel (33), that is fixed on the axle (s) on which is placed a reducer 31 and a generator (7),
**characterized in that**
it consists of a horizontally placed hollow axle (1) to which are connected between the floats (9) on the endless band (17), by one end, hollow telescopic spokes (14) of changeable length connected by the other end by a joint (41) to an arm of three-armed joint clutch (15), while on one end of the axle (1) a feeding contact clutch (16) is placed on whose bulk are radially made openings (23) with valves to one of which is connected, during contact, the end of a supply pipe (8) from a compressor (6), and in that from the openings (23) and through the hollow axle (1) and the hollow spokes (14) supply hoses (20) with compressed air are provided, whose one arm (21) passes through the upper arm of the clutch (15) and enters into bellows (24) of a lower and an upper auxiliary float (10) while the other arm (22) of the hose (20) passes through the lower arm (22) of the clutch (15) and enters into bellows (24) of the lover auxiliary float (10) of the next lower float (9), while in the lower arm (22) of the clutch (15) a sealing partition (27) is placed, through which passes the arm (22) of hose (20).

2. A hydrothrusting turbine according to Claim 1, characterized in that the floats (9) consist of auxiliary floats (10) and a basic float (11) that has a vertically placed central hollow carrier (26), with which are arranged parallel peripheric sticks (29) around which is wrapped an elastic cover (38) with vertical wrinkles (12), while at the ends of the central hollow carrier (26) are connected telescopic sticks (28) of the auxiliary float (10) which radially expand in form of a star with many arms and are arranged in two horizontal planes, orthogonally compared to the carrier (26) and vertical sticks (29) on whose ends are connected the ends of the horizontal telescopic sticks (28), having placed the auxiliary floats (10) between two sets of radial telescopic sticks (28) in form of stars, wherein upper and lower basis of the auxiliary float (10) has a height (h) and toroidal netlike cover (25), in which are inserted plate-form elastic bellows (24).

3. A hydrothrusting turbine, according to Claims 1 and 2, characterized in that between each two adjacent floats (9) is hermeticaly fixed, to an edge of their basis, an elastic cone cover (39) with transversal wrinkles (13), while through the cover (39) passes tightly an arm of the clutch (15) to which is connected the spoke (14).

4. A hydrothrusting turbine according to anyone of the Claims 1-3, characterized in that in the upper auxiliary float (10), which is placed in the upper basis of each float (9), between the lower surface of the wrapping (25) and the telescopic sticks (28), which lay in a lower plane of upper auxiliary float (10), a horizontal circular partition (40) is placed, having a diameter equal to the smallest diameter of the basic float (11) of the float (9) from which air is completely exhausted.

5. A hydrothrusting turbine according anyone of the Claims 1-4, characterized in that near the bottom of the pool (V) in funnel (4) an elastic tubular gasket (35), with a vertical opening (34) and a canal (42), is inserted and through which pass floats (9) with an arm of the clutch (15), to which the spoke (14) is connected.

6. An hydrothrusting turbine, having several floats (53) forming a working wheel (K₁) that passes upwards through a pool (V) filled with fluid whose thrusting force, acting on floats (53), executes constant rotation of the wheel, with a hollow axle (51), on whose extension (52) a cogged wheel (65) is fixed, into which is toothed cogged wheel (68) fixed on an axle (67) that enters into a reducer (66), whose exiting shaft is connected to exiting axle of an generator (57), characterized in that it consists of the horizontally placed hollow axle (51) with a broadened part (55) to which are, by one end, connected hollow spokes (54) that are in pairs connected by the other end thereof to a middle part of each vertical horizontally placed cylindric hollow float (53), elliptically arranged around the broadened part (55) and then they are connected to a starting cylinder of telescopic auxiliary floats (74) that are placed in a basic float (53) having a firm basis (72), while to the right extension (52) of the axle (51) is fixed a feeding contact clutch (60) on whose bulk are radially made openings (78) with valves, to which is connected, during contact, an end of the supply pipe (58) coming from a compressor (56), and in that from each opening (78), through the hollow extensions (52) and the axle (51), a supply hose (71) is provided which is divided into two arms (71') extending through the innerside opening of both spokes (54) and enter with their ends into the starting cylinders of auxiliary floats (74).

7. A hydrothrusting turbine according to Claim 6, having a pool (V) with fluid separated by a partition (70) from space (A) with atmospheric air, characterized in that on the lower end of the partition (70) is placed an elastic tubular gasket (69) with a cylindrical opening (64) for passage of floats (53), wherein the gaps between the floats (53) are filled by a gasket envelope (79).

. 8. The operating process for the hydrothrusting turbine according to any of the claim 1-7, characterized in that a rotary moment is obtained from the three sources of energy:

-by energetic pulses gained from the artifical source used to overcome resisting forces with a changeable and floatable volume, making a definite reserve of energy obtained at the start of the working regime, what is made by compressed air, which is brought into the auxiliary floats, what brings about positive work of the working wheel (K1),

-by using pressure of the atmospheric air column used for filling the basic floats which represents a big gain of power, because the atmospheric potential acts on each ms by a force of 10 tons, and

-by using the above mentioned working principles obtained from continually linear enlargement and reduction of all changeable volumes of the floats that substitute the blades of the water running turbines which produces a definite rotational force for the driving unit of the generator of any capacity.

*FIG. 1*

0 262 645

FIG.2b

FIG.2c

FIG.2

FIG.2a

FIG.2d

FIG.3

FIG. 3a

0 262 645

54   51   71                                        64a

FIG.3b                64b

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-C- 160 493 (HAUBRECHT)<br>* Description * | 1 | F 03 B 17/02 |
| A | FR-A-2 215 098 (LOS)<br>* Page 3, line 7 - page 5, line 22 * | 1,8 | |
| A | FR-A-1 244 375 (LE GUILLOU)<br>* Page 1, right-hand column, line 27 - through whole description * | 1,2,6,8 | |
| A | FR-A- 328 117 (CHRISTOFLEAU)<br>* Description * | 1,6,8 | |

TECHNICAL FIELDS
SEARCHED (Int. Cl.4)

F 03 B

The present search report has been drawn up for all claims

| Place of search | Date of completion of the search | Examiner |
|---|---|---|
| THE HAGUE | 28-12-1987 | DE WINTER P.E.F. |